# EUROPÄISCHE PATENTANMELDUNG

(11) **EP 2 226 460 A2**
(43) Veröffentlichungstag der Anmeldung: **08.09.2010**
(21) Anmeldenummer: 10002113.8
(22) Anmeldetag: 02.03.2010
(51) Int. Cl.: E06B 7/32, E05F 15/20

(54) **Zugangsvorrichtung für Tiere**

(30) Priorität: 05.03.2009 DE 202009002677 U
(71) Anmelder: Feldberglicht GmbH, 61476 Kronberg (DE)
(72) Erfinder: Seger, Christoph, 92318 Neumarkt (DE); Soderer, Sebastian, 92364 Unterbuchfeld (DE); Nuber, Florian, 92334 Berching (DE)
(74) Vertreter: Schneider, Andreas

(57) **Zusammenfassung**

Die Erfindung betrifft eine Zugangsvorrichtung für Tiere, insbesondere eine Katzenklappe. Um eine Lösung bereitzustellen, die ohne am oder im Tier angebrachte Elemente, wie beispielsweise Halsbänder oder implantierte Chips, funktioniert, wird eine Zugangsvorrichtung (1) vorgeschlagen mit einer Tür (2), mit einem Verriegelungsmechanismus (3) für die Tür (2), mit einer Erfassungseinrichtung (4) zum Erfassen von Daten eines die Zugangsvorrichtung (1) nutzenden Tieres (26), mit einer Auswerteeinrichtung (5) zum Auswerten dieser Daten, mit einer Betätigungseinrichtung (6) zum Betätigen des Verriegelungsmechanismus (3) unter Verwendung des Ergebnisses der Auswertung, **dadurch gekennzeichnet, daß** es sich bei den erfaßten Daten um tierkörperformabhängige Daten handelt.

## Beschreibung

Die Erfindung betrifft eine Zugangsvorrichtung für Tiere, insbesondere eine Katzenklappe.

Aus dem Stand der Technik sind Zugangsvorrichtungen für Tiere bekannt, die eine Tür, einen Verriegelungsmechanismus für die Tür, eine Erfassungseinrichtung zum Erfassen von Daten eines die Zugangsvorrichtung nutzenden Tieres, eine Auswerteeinrichtung zum Auswerten dieser Daten und eine Betätigungseinrichtung zum Betätigen des Verriegelungsmechanismus unter Verwendung des Ergebnisses der Auswertung aufweisen. Unter einer Verriegelungsvorrichtung wird dabei eine Vorrichtung zum Sperren und/oder Freigeben der Tür verstanden.

So sind beispielsweise "intelligente" Katzenklappen bekannt, bei denen die Katze ein Halsband mit einem Infrarotsender, Magnetschlüssel oder RFID-Transponder trägt. Die mit einem entsprechenden Empfänger in der Klappe aufgenommenen Signale werden dazu genutzt, der das Halsband tragenden Katze der Weg durch die Klappe freizugeben.

Um die Verletzungsgefahr zu beseitigen, die sich durch die Verwendung von Halsbändern ergibt, wurde vorgeschlagen, zur Identifizierung der Katze die bereits zahlreich zum Zweck der Tierregistrierung verwendeten Chips einzusetzen, die im Halsbereich der Katze unter der Tierhaut implantiert sind. Diese Chips werden von einer mit der Katzenklappe verbundenen Ausleseeinheit ausgelesen. Somit ist ebenfalls eine selektive Freigabe der Klappe möglich.

Eine Aufgabe der vorliegenden Erfindung ist es, eine Zugangsvorrichtung, wie oben beschrieben, bereitzustellen, die jedoch ohne am oder im Tier angebrachte Elemente, wie beispielsweise Halsbänder oder implantierte Chips, funktioniert.

Diese Aufgabe wird durch eine Zugangsvorrichtung nach Anspruch 1 bzw. durch ein Computerprogramm nach Anspruch 8 gelöst. Vorteilhafte Ausführungen der Erfindung sind in den Unteransprüchen angegeben.

Die im Folgenden im Zusammenhang mit einem Verfahren erläuterten Vorteile und Ausgestaltungen gelten sinngemäß auch für die erfindungsgemäße Vorrichtung und umgekehrt.

Die erfindungsgemäße Zugangsvorrichtung zeichnet sich dadurch aus, daß es sich bei den erfaßten und für die Betätigung des Verriegelungsmechanismus auszuwertenden Daten um tierkörperformabhängige Daten handelt. Eine Kernidee der Erfindung ist es mit anderen Worten, die Entscheidung über das Betätigen des Verriegelungsmechanismus und somit die Entscheidung über das Öffnen (und/oder Schließen oder Geschlossenhalten) der Tür auf der Grundlage von tierabhängigen Formdaten zu treffen.

Da jedes Tier über eine individuelle Körperform verfügt und insbesondere auch Tiere unterschiedlicher Rassen unterschiedlich geformte Körper aufweisen, kann mit der Erfindung daher bestimmt werden, ob es sich bei dem Tier um ein Tier handelt, daß die Tür durchtreten darf oder nicht. So kann beispielsweise der eigenen Katze oder dem eigenen Hund der Zugang durch die Tür gestattet werden, während beispielsweise einer fremden Katze oder einem fremden Hund oder aber einem wilden Tier, wie Marder, Fuchs oder Ratte, der Zugang verweigert werden kann.

Von Vorteil ist weiterhin, daß mit der Erfindung nicht nur eine besonders sichere Zugangskontrolle geschaffen wird. Auch kann gezielt ein Öffnen der Tür verhindert werden, wenn das Tier, beispielsweise eine Katze, eine Maus oder einen anderen Gegenstand im Maul trägt und damit die Tür passieren will. Vor diesem Hintergrund ist der Begriff "körperformabhängig" derart zu verstehen, daß damit nicht nur die Form des eigentlichen Tierkörpers des sich der Tür nähernden Tieres, sondern alternativ auch die Gesamtform des Tieres beschrieben wird, welche durch den eigentlichen Tierkörper und den durch das Tier transportierten Gegenstand gebildet wird. Durch das erfindungsgemäße Prinzip der Heranziehung körperformabhängiger Daten kann somit ein Einschleppen von lebenden, halblebenden oder bereits toten Beutetieren sowie ein ungewolltes Verschmutzen der Wohnung oder des Hauses effektiv verhindert werden. Dies ist bei den oben beschriebenen herkömmlichen Katzenklappen überhaupt nicht möglich und stellt einen wesentlichen Vorteil gegenüber den heute erhältlichen Lösungen dar.

In einer Ausführungsform der Erfindung handelt es sich bei den erfaßten Daten um Daten, die von dem Umriß (der Kontur) zumindest eines Teiles des Tierkörpers abhängig sind. Die Umrißlinie eignet sich für Zugangsvorrichtungen besonders gut zur Charakterisierung der Körperform, da diese vergleichsweise einfach zu detektieren ist und sich mit ihr die Körperform besonders zuverlässig erfassen läßt.

In einer besonders bevorzugten Ausführungsform der Erfindung handelt es sich bei den erfaßten Daten um Daten, die von dem Umriß lediglich eines Teiles des Tierkörpers abhängig sind. Die Erfassung einer Teilkontur des Tierkörpers vereinfacht das Verfahren und den technischen Aufwand deutlich, ohne daß dies Auswirkungen auf die Genauigkeit und Zuverlässigkeit der Ergebnisse hätte. Dies liegt unter anderem darin begründet, daß bereits eine vergleichsweise kurze Umrißlinie eine Identifikation des Tieres und damit eine Zugangskontrolle ermöglicht.

Körperformabhängige Daten und insbesondere Umrißlinien lassen sich besonders einfach mit Hilfe einer optischen Erfassungseinrichtung detektieren. In einer Ausführungsform der Erfindung umfaßt die Erfassungseinrichtung eine Anzahl von vorzugsweise paarweise angeordneten optischen Sendern und Empfängern umfaßt, die, vorzugsweise in der Nähe der Tür, derart angeordnet sind, daß das Erfassen der Daten in einem im wesentlichen vertikal verlaufenden Erfassungsbereich erfolgt. Die für das Erfassen der Umrißlinie verwendete Wellenlänge kann variieren. Als besonders geeignet und zugleich zuverlässig hat sich die Verwendung von InfrarotLicht herausgestellt.

Für die Auswertung der erfaßten Daten umfaßt in einer Ausführungsform der Erfindung die Auswerteeinrichtung eine Recheneinheit, vorzugsweise einen Mikrocontroller. Sofern eine Speicherung von Daten, beispielsweise von erfaßten Daten, Auswerteergebnissen, Toleranzwerten oder dergleichen erforderlich ist, umfaßt die Auswerteeinrichtung eine Speichereinheit, beispielsweise einen mit dem Mikrocontroller verbundenen Speicherchip. Mit der Verwendung einer elektronischen Recheneinheit ist eine sehr schnelle und zugleich vergleichsweise preiswerte Auswertung der Daten möglich. Zugleich lassen sich die Auswertealgorithmen sowie alle damit verbundenen Parameter, Schwellwerte usw. besonders einfach und flexibel ändern. Verschiedenste Arten von Zugangsvorrichtungen können mit einem einzigen Auswerteeinrichtungstyp ausgestattet werden. Es ist lediglich eine an den jeweiligen Anwendungsfall angepaßte Programmierung der Recheneinheit erforderlich. Die Zugangsvorrichtung kann durch eine entsprechende Anpassung der Auswerteeinrichtung an verschiedenste Tiere, insbesondere Kleintiere, wie Katzen, kleine Hunde usw. angepaßt werden. Sie ist daher sehr flexibel einsetzbar.

Gemäß einer Ausführungsform der Erfindung erfolgt die Auswertung der Daten ausschließlich unter Verwendung der Daten selbst sowie einer oder mehrerer von dem Hersteller oder dem Käufer einstellbarer Parameter. Insbesondere ist kein Vergleich der erfaßten Daten mit einem bereitzustellenden Referenzbild, einer Mustervorlage oder dergleichen erforderlich. Dadurch ist die Erkennung nicht nur sehr schnell und wenig fehleranfällig. Auch die Installation und Bedienung ist sehr einfach, da von dem Käufer, sofern überhaupt vorgesehen, nur wenige Einstellungen vorgenommen werden müssen, beispielsweise das Einstellen eines Toleranzwertes. So ist es für den Betrieb der Zugangsvorrichtung beispielsweise auch nicht erforderlich, ein Foto des Tieres anzufertigen, welches dann als Vorlage dient.

In einer weiteren Ausgestaltung der Erfindung ist die Recheneinheit derart ausgebildet ist, daß das Auswerten einen Datenvergleich wenigstens eines ersten Teils der erfaßten Daten mit wenigstens einem zweiten Teil der erfaßten Daten umfaßt und anhand der Ergebnisse dieses Datenvergleiches mindestens zwei Kontrollwerte ermittelt werden, deren Differenz mit einem einstellbaren Toleranzwert verglichen wird, wobei der Verriegelungsmechanismus unter Verwendung der Ergebnisses dieses Toleranzwertvergleiches betätigt wird. Ein solches Verfahren ist besonders vorteilhaft, da es mit sehr geringem Rechenaufwand eine besonders sichere Tiererkennung ermöglicht.

Als ganz besonders vorteilhaft hat sich eine Ausführungsform der Erfindung erwiesen, bei der die Recheneinheit derart ausgebildet ist, daß das Auswerten der erfaßten Daten ausschließlich unter Verwendung der Daten selbst erfolgt. Insbesondere kommen Auswertealgorithmen zum Einsatz, bei denen ausschließlich die aktuell erfaßten körperformabhängigen Daten verarbeitet werden, ohne daß es der Bereitstellung von Toleranzwerten oder dergleichen durch den Käufer bedarf. Mit anderen Worten wird eine selbstlernende Zugangsvorrichtung bereitgestellt, bei der die benötigten Toleranzwerte aus den erfaßten Daten durch die Auswerteinrichtung selbst ermittelt werden. Hierzu finden vor dem eigentlichen Betrieb der Zugangsvorrichtung Einlernvorgänge statt, bei denen das Tier durch die Tür läuft und die Auswerteeinrichtung die tierspezifischen körperformabhängigen Daten "lernt" und alle für einen sicheren Erkennungsbetrieb notwendigen Werte selbständig ermittelt.

Die Rechen- oder Datenverarbeitungseinheit, ist zur Durchführung derjenigen Schritte entsprechend des hier beschriebenen Verfahrens ausgebildet, die in einem Zusammenhang mit der Verarbeitung von Daten stehen. Die Recheneinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß dem beschriebenen Verfahren. Bei den Funktionsmodulen kann es sich um Hardwaremodule oder Softwaremodule handeln. Mit anderen Worten kann die Erfindung, soweit es die Recheneinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Vorzugsweise ist die Recheneinheit als Mikrocontroller realisiert, so daß die entsprechende Funktionalität der Erfindung in Form von Hardware realisiert ist. Liegt eine Implementierung in Form von Software vor, dann umfaßt das Computerprogramm Computerprogrammanweisungen zum Auswerten der von der Erfassungseinrichtung erfaßten Daten, wenn das Computerprogramm auf einem Rechner ausgeführt wird, wobei es sich bei den erfaßten Daten um tierkörperformabhängige Daten handelt.

Gemäß einer weiteren Ausführungsform der Erfindung umfaßt das Computerprogramm Computerprogrammanweisungen zum Auswerten dieser Daten, wenn das Computerprogramm auf einem Rechner ausgeführt wird, wobei das Auswerten der erfaßten Daten ausschließlich unter Verwendung der Daten selbst erfolgt.

Gemäß einer weiteren Ausführungsform der Erfindung umfaßt das Computerprogramm Computerprogrammanweisungen zum Auswerten dieser Daten, wenn das Computerprogramm auf einem Rechner ausgeführt wird, wobei das Auswerten einen Datenvergleich wenigstens eines ersten Teils der erfaßten Daten mit wenigstens einem zweiten Teil der erfaßten Daten umfaßt und anhand der Ergebnisse dieses Datenvergleiches mindestens zwei Kontrollwerte ermittelt werden, deren Differenz mit einem einstellbaren Toleranzwert verglichen wird, wobei der Verriegelungsmechanismus unter Verwendung der Ergebnisses dieses Toleranzwertvergleiches betätigt wird.

Zusammengefaßt bietet die Erfindung eine tierunschädliche, einfach herstellbare, preiswerte, platzsparende, einfach zu installierende, zuverlässig funktionstüchtige und einfach bedienbare elektronisch gesteuerte Zugangsvorrichtung mit geringem Energieverbrauch, die ohne am oder im Tier angebrachte Elemente, wie beispielsweise Halsbänder oder implantierte Chips, funktioniert.

Vorzugsweise handelt es sich bei der Erfindung um eine Katzenklappe, die mit Hilfe von Lichtschranken einen Teil des Umrisses eines sich durch die Lichtschranken hindurch bewegenden Katzenkopfes aufnimmt und allein durch ein Auszählen der unterbrochenen Lichtschranken ein entsprechendes Signal zum Öffnen oder Schließen der Klappentür gibt.

Die erfindungsgemäße Zugangsvorrichtung funktioniert somit, ohne daß es dafür des Einsatzes einer aufwendigen und teuren Technik bedarf. Die Zugangskontrolle wird mit einfachsten Mitteln ermöglicht, wodurch die Herstellungskosten für die Zugangsvorrichtung vergleichsweise niedrig sind.

Um eine noch höhere Funktionssicherheit zu erreichen, kann die erfindungsgemäße Technik in weiteren Ausführungsformen jedoch auch mit den erwähnten, aus dem Stand der Technik bekannten Erkennungstechniken kombiniert werden. So ist es beispielsweise möglich, die Zugangsvorrichtung so auszuführen, daß der Zugang nicht allein auf der Grundlage von tierabhängigen Formdaten gewährt wird, sondern daß für ein Öffnen der Klappentür eine zusätzliche Erkennung des Tieres erforderlich ist, beispielsweise mit Hilfe eines in einem Halsband angeordneten Infrarotsenders, Magnetschlüssels oder RFID-Transponders und/oder mit Hilfe eines implantierten Tierchips.

Die Kernidee der Erfindung kann auch insoweit abgewandelt werden, daß auf der Grundlage von tierabhängigen Formdaten nicht oder nicht nur eine Entscheidung über das Betätigen des Verriegelungsmechanismus und damit eine Entscheidung über das Öffnen einer Tür getroffen wird. So wäre es beispielsweise auch möglich, mit Hilfe der erfindungsgemäßen Tiererkennung zusätzlich zu der Betätigung des Verriegelungsmechanismus oder alternativ hierzu einen bestimmten anderen Vorgang auszulösen, beispielsweise eine optische und/oder akustische Signalisierung oder Benachrichtigung des Tierbesitzers.

Ein Ausführungsbeispiel der Erfindung wird nachfolgend anhand der Zeichnungen näher erläutert. Hierbei zeigen:
- Fig. 1: eine schematische Darstellung einer Zugangsvorrichtung,
- Fig. 2: eine perspektivische Darstellung einer Zugangsvorrichtung von vorn,
- Fig. 3: eine perspektivische Darstellung einer Zugangsvorrichtung von hinten,
- Fig. 4: eine schematische Darstellung einer Zugangsvorrichtung von vorn,
- Fig. 5: eine Beispielillustration mit einer Katze,
- Fig. 6: eine Beispielillustration mit einer Katze mit Maus,
- Fig. 7: eine Beispielillustration mit einem anderen Tier.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

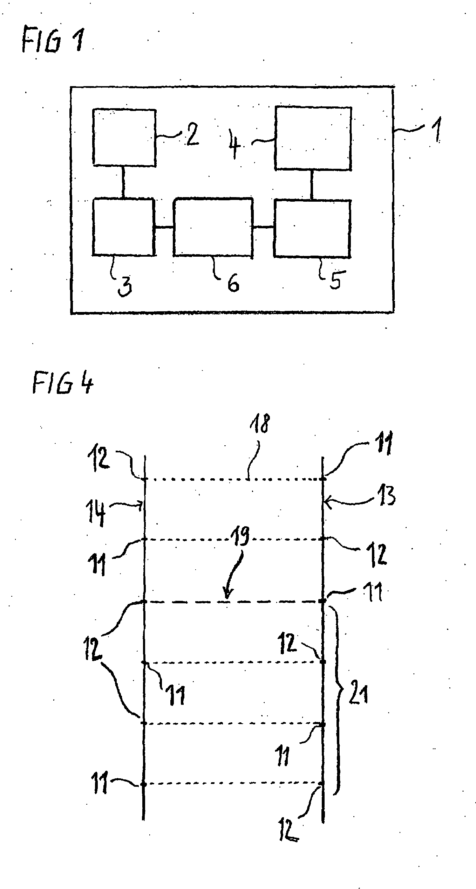

Wie in Fig. 1 schematisch skizziert, umfaßt die erfindungsgemäße Katzenklappe 1 eine Tür 2, einen Verriegelungsmechanismus 3 für die Tür 2, eine Erfassungseinrichtung 4 zum Erfassen von tierkörperformabhängigen Daten eines sich der Tür 2 nähernden und somit die Katzenklappe 1 nutzenden Tieres, eine Auswerteeinrichtung 5 zum Auswerten dieser Daten und eine Betätigungseinrichtung 6 zum Betätigen des Verriegelungsmechanismus 3 unter Verwendung des Ergebnisses der Auswertung.

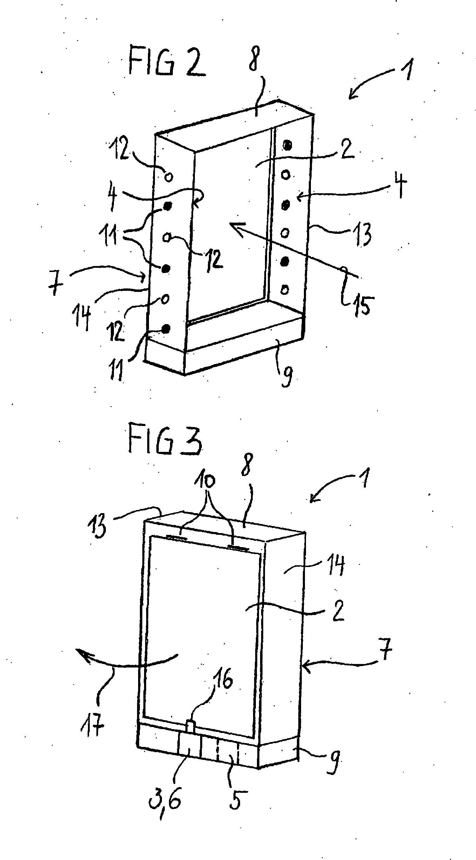

Anhand der Fig. 2 und 3 wird nachfolgend der konstruktive Aufbau der Katzenklappe 1 beschrieben. Die Katzenklappe 1 ist als in sich geschlossenes System ausgebildet. Die Basis der Katzenklappe 1 bildet eine Rahmenkonstruktion 7 mit einer oberen Querstrebe 8 und einer unteren Querstrebe, die als Sockel 9 ausgeführt ist. Die Tür 2 ist als eine an ihrer Oberseite über Scharniere 10 schwenkbar in dem Rahmen 7 befestigte Klappe ausgebildet. Als Erfassungseinrichtung 4 dienen eine Anzahl von paarweise angeordneten und damit Lichtschranken bildenden optischen Sendern 11 und Empfängern 12, die in Leistenform in den beiden vertikalen Seitenteilen 13, 14 des Rahmen 7 angeordnet sind, so daß sich ein durch die Lichtschranken aufgespannter, vertikaler Erfassungsbereich ergibt, wenn der Rahmen 7 in der abgebildeten Lage in einer Wohnungs- oder Haustür oder auch im Mauerwerk eingebaut wird. In Fig. 2 ist das linke Seitenteil 14 durchsichtig dargestellt, um die Anordnung der Sender 11 und Empfänger 12 in diesem Seitenteil darstellen zu können.

Als Sender 11 dienen beispielsweise Infrarot-Leuchtemitterdioden (IR-LEDs). Als Empfänger 12 werden beispielsweise NPN-Silizium-Fototransistoren eingesetzt. Für den Einsatz dieser Elemente 11, 12 sprechen unter anderem die Faktoren Lebensdauer, Stromverbrauch und Strahlungsstärke. Es können jedoch auch andere entsprechend geeignete Sender und Empfänger verwendet werden.

In den Figuren sind symbolisch jeweils sechs Sender 11 und Empfänger 12 abgebildet. Tatsächlich umfassen die Leisten insgesamt 24 Sender 11 und 24 Empfänger 12, so daß sich 24 Lichtschranken ergeben. Die Zahl der Lichtschranken bestimmt die Auflösung und damit die Genauigkeit der Erkennung und kann, je nach Anwendungsfall und Größe der Zugangsvorrichtung, variieren.

Sowohl Sender 11, als auch Empfänger 12 sind mit einer Bauhöhe von ca. 3 mm klein genug, um eine Anzahl von Lichtschranken auf dem beschränkt zur Verfügung stehenden Einbauplatz unterzubringen, die für eine Auflösung ausreicht, wie sie für die gewünschte Tiererkennung erforderlich ist.

Um sicherzustellen, daß es zu keinen Überschneidungen der Lichtkegel der IR-LEDs und damit zu Fehlern bei der Datenerfassung kommt, sind Sender 11 und Empfänger 12 in den Seitenteilen 13, 14 abwechselnd angeordnet. Zusätzlich kann der Lichtkegel der IR-LEDs durch konstruktive Maßnahmen eingeschränkt werden.

Mit den Sender- und Empfängerleisten ist es möglich, den Umriß eines in Eingangsrichtung 15 in den Erfassungsbereich eintretenden Tieres zu erfassen. Die dabei erfaßten Daten werden von der Erfassungseinrichtung 4 einer Auswerteeinrichtung 5 in Gestalt eines Mikrocontrollers zugeführt, dessen Arbeitsweise weiter unten im Detail erläutert wird. Das zum Betrieb des Mikrocontrollers 5 erforderliche Umfeld, einschließlich der Controllerplatine und der erforderlichen Schaltung mit Signalverstärkern etc., ist dem Fachmann geläufig, so daß an dieser Stelle nicht darauf eingegangen werden muß.

Nach der Auswertung der Daten steuert der Mikrocontroller 5 die Betätigungseinrichtung 6 für den Verriegelungsmechanismus 3 an. Der Verriegelungsmechanismus 3 umfaßt eine einfache Sperrklinke 16, die ein Öffnen der Klappe 2 in Eingangsrichtung 15 verhindert. Ein Öffnen der Klappe 2 in der entgegengesetzten Ausgangsrichtung ist hingegen jederzeit möglich. Die Sperrklinke 16 ist beispielsweise als ein aus einem metallischen Material bestehendes, federnd gelagertes Bauteil ausgeführt. Die Betätigungseinrichtung 6, die in dem Sockel 9 des Rahmens 7 untergebracht ist, umfaßt einen über den Mikrocontroller 5 ansteuerbaren Magnetschalter. Ein Elektromagnet des Schalters wirkt mit der Sperrklinke 16 derart zusammen, daß diese entgegen der Federkraft aus ihrer Sperrstellung nach unten in eine Öffnungsstellung bewegbar ist, in der die Klappe 2 durch mechanische Betätigung in Schwenkrichtung 17 nach innen verschwenkt werden kann. Zum Wiederherstellen der Verriegelung wird der Elektromagnet einfach abgeschaltet und eine zugleich als Stütze für die Sperrklinke dienende Feder drückt die Sperrklinke 16 wieder in ihre Sperrstellung nach oben.

In dem Rahmen 7, der zugleich als Gehäuse dient, sind alle für den Betrieb der Katzenklappe 1 benötigten Elemente, insbesondere die Erfassungseinrichtung 4, 11, 12 die Auswerteeinrichtung 5 und die Betätigungseinrichtung 6 verbaut. Ob beispielsweise die Auswerteeinrichtung 5 in dem Sockelgehäuse 9 oder aber in der oberen Querstrebe 8 untergebracht ist, spielt für die Erfindung keine vorrangige Rolle und kann daher auch von dem gewünschten Design der Katzenklappe 1 abhängig gemacht werden.

Der Rahmen 7 ist zudem wetterfest verschlossen und schützt somit alle integrierten Elemente vor Wind, Regen usw. Die Ränder der Gehäuseteile sind mit Dichtungselementen, beispielsweise Spachtelmasse und O-Ringen, abgedichtet. Durch die gekapselte, integrierte Bauweise ist nicht nur eine besonders einfache Installation möglich. Auch wird die Manipulation von außen oder ein Diebstahl einzelner Komponenten erschwert. Mikrocontroller 5 und Betätigungseinrichtung 6 werden über eine ebenfalls in dem Rahmen 7 integrierte Batterie oder wiederaufladbare Akkumulatoren mit der erforderlichen Betriebsspannung versorgt. Anschlußkabel oder dergleichen sind daher nicht erforderlich. In einer weiteren Ausführung kann alternativ oder zusätzlich zu dem Batteriebetrieb ein Netzbetrieb vorgesehen sein.

Nachfolgend wird unter Verweis auf Fig. 4 bis 7 die Erfassung und Auswertung der Daten näher beschrieben.

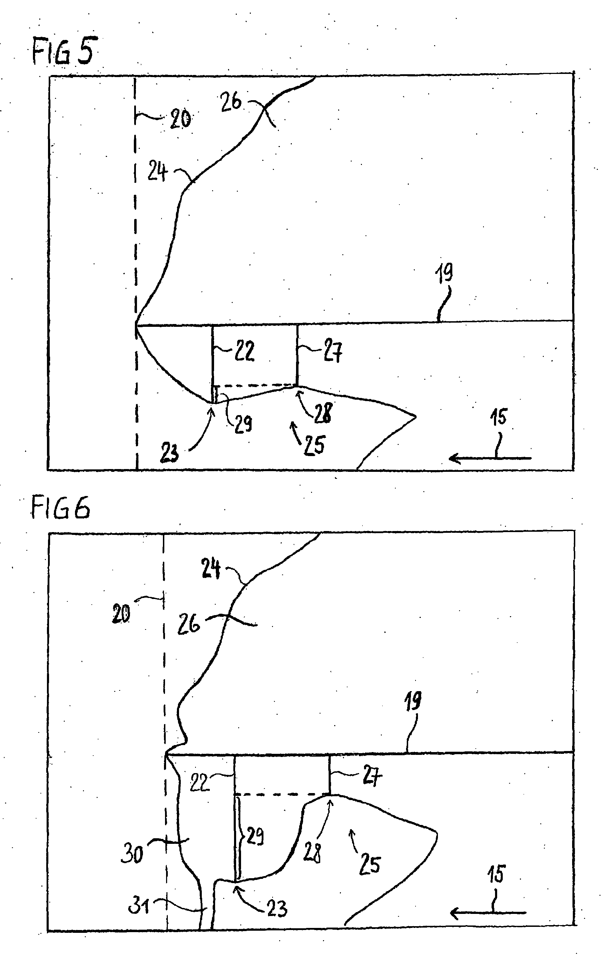

In regelmäßigen Abständen, beispielsweise zehn mal pro Sekunde, wird der Status der Lichtschranken von dem Mikrocontroller 5 abgefragt. Die Abfrage erfolgt dabei beginnend mit der obersten, d.h. der zu der oberen Querleiste 8 nächstliegenden Lichtschranke 18, und wird nach unten fortgesetzt. Tritt ein Tier in den Erfassungsbereich ein, wird registriert, welche Lichtschranke zuerst unterbrochen wird. Diese bildet für alle weiteren Abfragen eine obere Grenze 19, siehe Fig. 4. In den Fig. 5 bis 7 ist diese Grenze 19 symbolisch als Startzeitpunkt 20 abgebildet. Das bedeutet, daß anschließend nur noch diejenigen Lichtschranken abgefragt werden, welche sich in einem Bereich 21 unterhalb der zuerst aktivierten Lichtschranke, der oberen Grenze 19, befinden. Dies ist gleichbedeutend damit, daß es sich bei den erfaßten Daten um Daten handelt, die von dem Umriß lediglich eines Teiles des Tierkörpers abhängig sind, nämlich der Kopfunterseite des Tieres, vgl. Fig. 5 bis 7. Potentielle Quellen für Ungenauigkeiten bei der Erkennung, wie beispielsweise die Stellung der Ohren, können somit ausgeschlossen werden.

Nachdem ermittelt ist, wie viele Lichtschranken sich noch unterhalb der zuerst aktivierten Lichtschranke 19 befinden, wird durch in regelmäßigen Abständen erfolgende weitere Abfragen ermittelt, wie viele davon gerade unterbrochen sind. So ergeben sich eine Reihe von Abfrageergebnissen. Unmittelbar nach jeder Abfrage wird ermittelt, ob die zuletzt ermittelte Anzahl an unterbrochenen Lichtschranken größer oder kleiner ist als die zuvor ermittelte Anzahl an unterbrochenen Lichtschranken. Mit anderen Worten erfolgt ein Vergleich eines ersten Teils der erfaßten Daten mit einem zweiten Teil der erfaßten Daten. Auf diese Weise wird ein Maximalwert 22 ermittelt, der einer besonders hohen Anzahl an unterbrochenen Lichtschranken entspricht und eine untere Kante 23 der Umrißlinie 24 der Kopfunterseite 25 des Tieres 26 entspricht. Dieser Maximalwert 22 wird als erster Kontrollwert in dem Mikrocontroller 5 gespeichert.

Anhand der sich aus der laufenden Abfrage ergebenden Reihe von Abfrageergebnissen wird anschließend nach dem gleichen Prinzip ein Minimalwert 27 ermittelt, der einer besonders niedrigen Anzahl an unterbrochenen Lichtschranken entspricht und einer oberen Kante 28 der Umrißlinie 24 der Kopfunterseite 25 des Tieres 26 entspricht. Dieser Minimalwert 27 wird als zweiter Kontrollwert in dem Mikrocontroller 5 gespeichert. Minimalwert 27 und Maximalwert 22 sind in Fig. 5 bis 7 symbolhaft als Abstände zwischen der durch die zuerst aktivierte Lichtschranke 19 definierten Grenze einerseits und der unteren bzw. oberen Kante 23, 28 der Umrißlinie 24 andererseits dargestellt.

Die Ermittlung des Maximalwertes 22 und des Minimalwertes 27 kann auch auf andere Art und Weise als durch einen einfachen Vergleich benachbarter Werte erfolgen, beispielsweise unter Anwendung bekannter mathematischer Verfahren zur Extremwertermittlung. Weist die Umrißlinie 24 keine Minimal- oder Maximalwerte auf, kann eine Beurteilung des "Kurvenverlaufes" der Umrißlinie 24 erfolgen, beispielsweise eine Ermittlung von Umkehrpunkten oder dergleichen, so daß auch auf diese Art und Weise eine Positiv- oder Negativerkennung erfolgen kann.

Die Abfrage der Lichtschranken wird beendet, wenn beide Kontrollwerte 22, 27 erfaßt sind. Alternativ dazu kann eine weitere Lichtschranke (nicht abgebildet) vorgesehen sein, die in Eingangsrichtung 15 zwischen dem Erfassungsbereich und der Tür 2 angeordnet ist, und deren Unterbrechung die Abfrage der in den Seitenteilen 13, 14 angeordneten Lichtschranken beendet.

Anschließend wird durch den Mikrocontroller 5 der Abstand zwischen den beiden Kontrollwerte 22, 27 bestimmt. Die ermittelte Kontrollwertdifferenz 29 wird mit einem von dem Hersteller voreingestellten oder von dem Käufer einstellbaren Toleranzwert verglichen. Ist die Kontrollwertdifferenz 29 kleiner als der Toleranzwert, wie dies beispielhaft bei der in Fig. 5 dargestellten Situation der Fall ist, steuert der Mikrocontroller 5 den Verriegelungsmechanismus 3 an und die Verriegelung wird gelöst, so daß sich die Klappe 2 öffnen kann. Ist die Kontrollwertdifferenz 29 größer als der Toleranzwert, bleibt die Verriegelung bestehen und die Klappe 2 kann von außen nicht geöffnet werden. Dies ist beispielsweise der Fall, wenn das Tier 26 einen Gegenstand im Maul trägt, wie am Beispiel einer Maus 30 in Fig. 6 dargestellt. In dem hier beschriebenen Beispielfall wird davon ausgegangen, daß der Mauseschwanz 31 nicht mit erfaßt wird und daher auch keinen Einfluß auf den Kontrollwert 22 hat. In der Praxis kann unter Umständen eine Erfassung des Schwanzes erfolgen, wobei dies zu einer noch größeren Kontrollwertdifferenz führt.

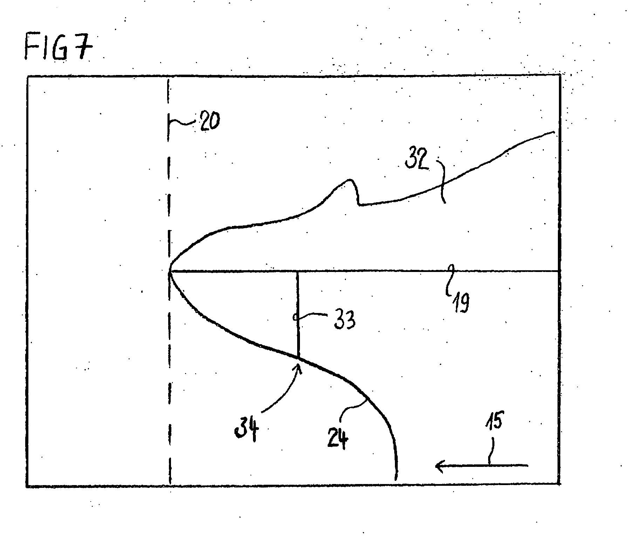

Unabhängig von der Erkennung eines durch das Tier 26 transportierten Gegenstandes 30 ist es bereits durch die Ermittlung der Kontrollwerte 22, 27 möglich, zu entscheiden, ob die Klappe 2 geöffnet werden soll oder nicht. So verfügt beispielsweise eine Katze (Fig. 5) eine andere Umrißlinie 24 der Kopfunterseite 25 als beispielsweise eine Ratte 32 oder dergleichen, bei der ein einzelner Kontrollwert 33 anhand des Punktes 34 ermittelt wurde, bei dem sich der Anstieg der Umrißlinie 24 umkehrt (Fig. 7).

Der Toleranzwert kann in einer Ausführungsform durch den Mikrocontroller 5 selbst ermittelt werden, indem vor dem eigentlichen Betrieb in einem Lernmodus die charakteristische Umrißlinie 24 des betreffenden Tieres 26 erfaßt und aus diesen Daten ein Toleranzwert ermittelt wird. Hierzu ist es von Vorteil, den Einlernvorgang mehrmals zu wiederholen. Der Mikrocontroller 5 umfaßt in dieser Ausführungsform eine zur Ermittlung des Toleranzwertes geeignete Programmierung.

Unabhängig von dem oben beschriebenen Ausführungsbeispiel lassen sich unter Beibehaltung der erfindungsgemäßen Grundgedanken weitere Ausgestaltungen der Katzenklappe 1 bereitstellen. So ist es beispielsweise möglich, den Abstand zwischen den Lichtschranken 11, 12 und der Klappe 2 zu variieren. Um den Stromverbrauch zu senken ist es darüber hinaus möglich, eine Aktivierungs-Lichtschranke (nicht abgebildet) vorzusehen, die in Eingangsrichtung 15 vor dem Erfassungsbereich liegt. Die Datenerfassung wird in diesem Fall erst dann aktiviert, wenn ein Tier 26 die Aktivierungs-Lichtschranke durchbricht.

Anstelle einer Aktivierungs-Lichtschranke kann auch ein berührungsfreier induktiver Näherungsschalter, ein auf Ultraschall oder Radar basierender berührungsfreier Näherungsschalter, eine durch das Tier betätigbare Schalterwippe oder ein anderer, aus dem Stand der Technik bekannter Mechanismus verwendet werden, um den Strom zum Betrieb der Katzenklappe nur dann einzuschalten, wenn er benötigt wird.

In einer abgewandelten Ausführungsform ist ein Toleranzwertebereich vorgegeben, d.h. es erfolgt ein Vergleich der Kontrollwertdifferenz 29 mit einem oberen und einem unteren Toleranzwert. Hierdurch kann die Zugangsvorrichtung noch genauer an die Erkennungsanforderungen angepaßt werden.

Auch ist es möglich, keine fest vorgeschriebene Kontrollwertermittlung durchzuführen, bei der zunächst ein Maximalwert und dann ein Minimalwert gesucht wird, sondern statt dessen den Verlauf der Umrißlinie 24 ergebnisoffen zu erfassen und auszuwerten. Dadurch läßt sich das Einsatzspektrum der Zugangsvorrichtung weiter erhöhen. Beispielsweise können Tiere anhand ihrer Umrißlinien erkannt und sicher von einem Zutritt ausgeschlossen werden.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Zugangsvorrichtung, Katzenklappe
- 2: Tür, Klappe
- 3: Verriegelungsmechanismus
- 4: Erfassungseinrichtung
- 5: Auswerteinrichtung, Mikrocontroller
- 6: Betätigungseinrichtung
- 7: Rahmen
- 8: obere Querstrebe
- 9: untere Querstrebe, Sockel
- 10: Scharnier
- 11: Sender
- 12: Empfänger
- 13: Seitenteil
- 14: Seitenteil
- 15: Eingangsrichtung
- 16: Sperrklinke
- 17: Schwenkrichtung
- 18: Lichtschranke
- 19: obere Grenze
- 20: Startzeitpunkt
- 21: Lichtschrankenbereich
- 22: Maximalwert
- 23: untere Kante
- 24: Umrißlinie
- 25: Kopfunterseite
- 26: Tier
- 27: Minimalwert
- 28: obere Kante
- 29: Kontrollwertdifferenz
- 30: Maus
- 31: Mausschwanz
- 32: Ratte
- 33: Kontrollwert
- 34: Umkehrpunkt

## Patentansprüche

1. Zugangsvorrichtung (1) für Tiere, insbesondere Katzenklappe,
- mit einer Tür (2),
- mit einem Verriegelungsmechanismus (3) für die Tür (2),
- mit einer Erfassungseinrichtung (4) zum Erfassen von Daten eines die Zugangsvorrichtung (1) nutzenden Tieres (26),
- mit einer Auswerteeinrichtung (5) zum Auswerten dieser Daten,
- mit einer Betätigungseinrichtung (6) zum Betätigen des Verriegelungsmechanismus (3) unter Verwendung des Ergebnisses der Auswertung,
**dadurch gekennzeichnet, daß** es sich bei den erfaßten Daten um tierkörperformabhängige Daten handelt.

2. Zugangsvorrichtung (1) nach Anspruch 1, **dadurch gekennzeichnet, daß** es sich bei den erfaßten Daten um Daten handelt, die von dem Umriß (24) zumindest eines Teiles (25) des Tierkörpers abhängig sind.

3. Zugangsvorrichtung (1) nach Anspruch 1 oder 2, **dadurch gekennzeichnet, daß** es sich bei den erfaßten Daten um Daten handelt, die von dem Umriß (24) lediglich eines Teiles (25) des Tierkörpers abhängig sind.

4. Zugangsvorrichtung (1) nach einem der Ansprüche 1 bis 3, **dadurch gekennzeichnet, daß** die Erfassungseinrichtung (4) eine Anzahl von vorzugsweise paarweise angeordneten optischen Sendern (11) und Empfängern (12) umfaßt, die, vorzugsweise in der Nähe der Tür (2), derart angeordnet sind, daß das Erfassen der Daten in einem im wesentlichen vertikal verlaufenden Erfassungsbereich erfolgt.

5. Zugangsvorrichtung (1) nach einem der Ansprüche 1 bis 4, **dadurch gekennzeichnet, daß** die Auswerteeinrichtung (5) eine Recheneinheit, vorzugsweise einen Mikrocontroller, umfaßt zum Auswerten der erfaßten Daten.

6. Zugangsvorrichtung (1) nach Anspruch 5, **dadurch gekennzeichnet, daß** die Recheneinheit (5) derart ausgebildet ist, daß das Auswerten einen Datenvergleich wenigstens eines ersten Teils der erfaßten Daten mit wenigstens einem zweiten Teil der erfaßten Daten umfaßt und anhand der Ergebnisse dieses Datenvergleiches mindestens zwei Kontrollwerte (22, 27) ermittelt werden, deren Differenz (29) mit einem einstellbaren Toleranzwert verglichen wird, wobei der Verriegelungsmechanismus (3) unter Verwendung der Ergebnisses dieses Toleranzwertvergleiches betätigt wird.

7. Zugangsvorrichtung (1) nach Anspruch 5 oder 6, **dadurch gekennzeichnet, daß** die Recheneinheit (5) derart ausgebildet ist, daß das Auswerten der erfaßten Daten ausschließlich unter Verwendung der Daten selbst erfolgt.

8. Computerprogramm zum Betrieb einer Zugangsvorrichtung (1) für Tiere, wobei die Zugangsvorrichtung (1) eine Tür (2), einen Verriegelungsmechanismus (3) für die Tür (2), eine Erfassungseinrichtung (4) zum Erfassen von Daten eines die Zugangsvorrichtung (1) nutzenden Tieres (26), eine Auswerteeinrichtung (5) zum Auswerten dieser Daten und eine Betätigungseinrichtung (6) zum Betätigen des Verriegelungsmechanismus (3) unter Verwendung des Ergebnisses der Auswertung aufweist, mit Computerprogrammanweisungen zum Auswerten der von der Erfassungseinrichtung erfaßten Daten, wenn das Computerprogramm auf einem Rechner ausgeführt wird, wobei es sich bei den erfaßten Daten um tierkörperformabhängige Daten handelt.

9. Computerprogramm nach Anspruch 8, wobei das Auswerten der erfaßten Daten ausschließlich unter Verwendung der Daten selbst erfolgt.

10. Computerprogramm nach Anspruch 9, wobei das Auswerten einen Datenvergleich wenigstens eines ersten Teils der erfaßten Daten mit wenigstens einem zweiten Teil der erfaßten Daten umfaßt und anhand der Ergebnisse dieses Datenvergleiches mindestens zwei Kontrollwerte ermittelt werden, deren Differenz mit einem einstellbaren Toleranzwert verglichen wird, wobei der Verriegelungsmechanismus unter Verwendung der Ergebnisses dieses Toleranzwertvergleiches betätigt wird.
